# EUROPÄISCHE PATENTSCHRIFT

(11) **EP 1 882 125 B1**
(45) Veröffentlichungstag und Bekanntmachung des Hinweises auf die Patenterteilung: **03.07.2019**
(21) Anmeldenummer: 06753716.7
(22) Anmeldetag: 18.05.2006
(51) Int. Cl.: F16M 7/00, F25D 23/00, A47B 91/02

(54) **STELLFUSSEINHEIT EINES HAUSHALTGERÄTES**
POSITIONING FOOT UNIT OF A DOMESTIC APPLIANCE
UNITE DE PIED REGLABLE POUR APPAREIL MENAGER

(30) Priorität: 19.05.2005 DE 202005007883 U; 10.08.2005 DE 202005012626 U
(43) Veröffentlichungstag der Anmeldung: 30.01.2008
(73) Patentinhaber: Liebherr-Hausgeräte Ochsenhausen GmbH, 88416 Ochsenhausen (DE)
(72) Erfinder: BLERSCH, Dietmar, 88521 Ertingen (DE); ARNOLD, Klaus, 88416 Erlenmoos-Eichbühl (DE); WEIDELENER, Oliver, 88422 Alleshausen (DE)
(74) Vertreter: Herrmann, Uwe
(86) Internationale Anmeldenummer: PCT/EP2006/004734
(87) Internationale Veröffentlichungsnummer: WO 2006/122811

(56) Entgegenhaltungen:
- WO-A-96/37729
- DE-U1- 7 708 812
- DE-U1- 8 506 152
- US-A- 3 071 887
- US-A- 3 186 670
- US-A- 4 858 865

## Beschreibung

Die Erfindung betrifft ein Kühl- und/oder Gefriergerät mit einer Stellfußeinheit.

Höhenverstellvorrichtungen für Füße von Haushaltsgeräten sind in zahlreichen unterschiedlichen Ausführungsformen bekannt.

Aus der U.S. 4,991,805 ist eine Höhenverstellvorrichtung für Füße eines Kühlgerätes bekannt, die eine rotierbar angeordnete Verstellstange aufweist, die in ihrem Endbereich mit einem Getrieberad drehfest in Verbindung steht. Das Getrieberad kämmt seinerseits mit einer Mutter, die mit ihrem Innengewinde mit dem Außengewinde einer Gewindestange in Eingriff steht, die mit dem Fußteil in Verbindung steht. Eine Rotation der Mutter führt zu einer Positionsänderung des Fußes und somit zu einer Höhenverstellung des Gerätes.

Eine Höhenverstellvorrichtung, bei der die Rotation einer Betätigungsstange mittels eines Schneckenradgetriebes übertragen wird und zu einer axialen Verstellbewegung des Fußteils führt, ist aus der DE 196 06 460 bekannt.

Die U.S. 4,789,121 betrifft eine Höhenverstellvorrichtung eines Kühlgerätes, die eine von der Bedienseite des Gerätes zugängliche Gewindestange aufweist. Die Höhenverstellvorrichtung weist ferner einen schwenkbar am Gehäuse des Kühlgerätes gelagerten Fuß auf, in dem sich verdrehfest eine Mutter befindet, die mit der Gewindestange kämmt. Eine Rotation der Gewindestange führt zu einer axialen Verschiebung der Mutter relativ zu der Gewindestange und somit zum Verschwenken des Fußes um eine ortsfest angeordnete Schwenkachse. Eine Höhenverstellvorrichtung mit einem schwenkbar gelagerten Fuß ist des weiteren aus der U.S. 5,749,550 bekannt. Bei dieser Anordnung wirkt der schwenkbar gelagerte Fuß mit einer Zugstange zusammen, deren Position über eine Gewindestange verstellbar ist. Wird die Gewindestange betätigt, führt dies zu einer Veränderung der Position der Zugstange und somit zu einem Verschwenken des Fußes. Die Schwenkbewegung des Fußes führt zu einer Höhenverstellung des Gerätes.

Aus der U.S. 4,955,569, U.S. 3,186,670 sowie der U.S. 3,071,887 sind Höhenverstellvorrichtungen bekannt, bei denen die Rotation einer von der Bedienseite des Gerätes aus zugänglichen Betätigungsstange dazu führt, dass ein mit einer schiefen Ebene zusammenwirkendes Verstellelement so bewegt wird, dass die Position des Verstellelementes relativ zu der schiefen Ebene verändert wird, wobei sich die Höhenposition des Gerätes entsprechend verändert.

Die U.S. 3,750,989 offenbart eine Höhenverstellvorrichtung eines Haushaltsgerätes, die eine von der Bedienseite aus zugängliche rotierbare Verstellstange aufweist. Deren Gewinde steht mit dem Innengewinde einer Mutter in Eingriff, die verdrehfest in einem schwenkbar angeordneten Fuß des Gerätes angeordnet ist. Eine Rotation der Stange führt zu einer Axialbewegung zwischen Mutter und Stange und somit zu einer Schwenkbewegung des Fußes. Die U.S. 3,927,853 betrifft ebenfalls eine Höhenverstellvorrichtung eines Gerätes mit einem schwenkbar angeordneten Fuß. Dessen Schwenkwinkel und damit die Höhenposition des Gerätes wird durch die Position eines keilförmigen Elementes bestimmt, das zwischen dem verschwenkbaren Fuß und das Gehäuse eingezogen werden kann. Dessen Bewegung wird mittels einer Stange oder einem Draht von der Bedienseite des Gerätes aus gesteuert.

Die DE 36 04 838 sowie die DE 43 43 709 betreffen Höhenverstellvorrichtungen für Füße von Haushaltsgeräten, die mittels eines biegsamen Welle betätigt werden, die von der Bedienseite bzw. einer Seitenwand des Gerätes aus zugänglich sind.

Letztlich betreffen auch die Dokumente DE 8 506 152 U und DE 7 708 812 U gattungsgemäße Stellfußeinheiten für Kühl- und/oder Gefriergeräte.

Aus dem oben genannten Stand der Technik sind Höhenverstellvorrichtungen bekannt, bei denen die Betätigungsstangen als Zug- bzw. Druckstangen dienen, die die auf die Füße wirkenden durch das Gewicht des Gerätes bedingten Kräfte in den vorderen Bereich des Haushaltsgerätes leiten. Die Reaktionskräfte müssen von dem gesamten Geräterahmen übernommen werden.

Es ist die Aufgabe der Erfindung, eine Stellfußeinheit der eingangs genannten Art dahingehend weiterzubilden, dass die Betätigungsstange keine Zug- und Drucckräfte aufzunehmen hat.

Diese Aufgabe wird durch ein Kühl- und/oder Gefriergerät mit den Merkmalen des Anspruchs 1 gelöst.

Bei Rotation der Spindel durch die Stange kommt es zu einer Verschiebung der Verstelleinheit bzw. Mutter auf der Spindel. Aufgrund der schiefen Ebene, die die Kontaktfläche zwischen Mutter und dem Fußteil bildet, kommt es zu einer Einschub- bzw. Ausschubbewegung des Fußteils relativ zu dem Gehäuse und somit zu einer Höhenverstellung des gesamten Haushaltsgerätes.

Die Reaktionskräfte der durch das Gerätegewicht bedingten Vertikallast werden durch das Gehäuse der Stellflußheit aufgenommen.

Das Gehäuse der Stellfußeinheit befindet sich in bevorzugter Ausgestaltung im Bereich des Fußteils und erstreckt sich vorzugsweise nicht über die gesamte Längs- oder Querseite des Gerätes.

Die Verstelleinheit bzw. Mutter gemäß der Erfindung ist somit als Gleitstück ausgeführt, das bei Drehung der Spindel relativ zu dem Fußteil eine Gleitbewegung ausführt.

In weiterer Ausgestaltung der Erfindung ist vorgesehen, dass die Spindel ein Außengewinde aufweist, das mit einem Innengewinde der Mutter bzw. des Gleitstückes in Eingriff steht.

Gemäß einer weiteren Ausgestaltung der Erfindung ist eine lösbare Verbindung, insbesondere eine Steckkupplung zwischen der Stange und der Spindel vorgesehen, die die beiden Bauteile ohne weitere Verbindungselemente miteinander verbindet. Auch ist eine unlösbare Verbindung denkbar. Von der Erfindung ebenfalls umfasst ist eine einstückige Ausführung von Stange und Spindel, d. h. beide Elemente werden durch dasselbe Bauteil gebildet.

Die Spindel ist in bevorzugter Ausgestaltung der Erfindung horizontal angeordnet. Sie ist vorzugsweise an zwei in Achsrichtung der Spindel voneinander beabstandeten Positionen gelagert, zwischen denen die Spindel einen Abschnitt mit Außengewinde aufweist, auf dem die Mutter läuft.

In weiterer Ausgestaltung der Erfindung ist das Fußteil in das Gehäuse zumindest teilweise einschiebbar. In bevorzugter Ausgestaltung der Erfindung wird das Fußteil von unten in das Gehäuse eingeschoben und die relative Position von Mutter und Fußteil bestimmt über die vertikale Position des Fußteils und somit auch über die vertikale Position des Haushaltsgerätes.

In weiterer Ausgestaltung der Erfindung ist in dem Fußteil eine Achse angeordnet, auf der eine Rolle drehbar gelagert ist. Auf diese Weise kann ein rollender Stellfuß geschaffen werden, der in jeder Position des Fußteils gewährleistet, dass beim Aufstellen des Haushaltsgerätes eine schonende Rollbewegung durchgeführt werden kann, die den Bodenbelag vor Beschädigung schützt.

In weiterer Ausgestaltung der Erfindung ist vorgesehen, dass das Fußteil formschlüssig in dem Gehäuse derart aufgenommen ist, dass eine Rotation des Fußteils relativ zu dem Gehäuse um eine vertikale Achse nicht oder nur begrenzt möglich ist. Das Fußteil wird somit in dem Gehäuse formschlüssig geführt. Es ist vorzugsweise in das Gehäuse einschiebbar und aus dem Gehäuse ausschiebbar, nicht jedoch relativ in dem Gehäuse drehbar.

Die Verstelleinheit kann eine Bohrung mit einem Innengewinde aufweisen, in der die Spindel drehbar aufgenommen ist, wobei die Verstelleinheit eine die schiefe Ebene bildende Fläche aufweist, die gegenüber der Längsachse der Bohrung geneigt ist. Bei horizontal angeordneter Spindel ist die Bohrung ebenfalls horizontal angeordnet und die Fläche der Verstelleinheit, mit der diese mit dem Fußteil in Verbindung steht ist gegenüber der Längsachse der Spindel bzw. der Bohrung geneigt.

In weiterer Ausgestaltung der Erfindung ist vorgesehen, dass die Stange in ihrem vorderen Endbereich eine Werkzeugaufnahme zum Zwecke der Rotation der Stange mittels eines Werkzeuges aufweist. In bevorzugter Ausgestaltung ist die Werkzeugaufnahme zum Außen- sowie auch zum Innenantrieb geeignet, so dass mehrere Antriebsmöglichkeiten zur Verfügung stehen.

Um zu verhindern, dass nach dem Erreichen der untersten Stellung des Fußteils durch weiterdrehen der Stange die Spindel aus dem Gehäuse herausbewegt wird, kann ein Sicherungselement vorgesehen sein, das die Spindel gegen axiales Verschieben sichert und stets in ihrer gewünschten axialen Position hält. Dabei kann es sich beispielsweise um eine Feder handeln, die in bevorzugter Ausgestaltung der Erfindung an dem Gehäuse angeordnet ist.

Vorzugsweise ist vorgesehen, dass sich das vordere Ende der Stange im Bereich im Bereich der Sockelleiste des Gerätes erstreckt. Auf diese Weise ist es möglich, die Bedienung des erfindungsgemäßen Fußes mit Höhenverstellvorrichtung bequem von der Frontseite des Gerätes aus vorzunehmen.

Das Kühl- bzw. Gefriergerät kann mehrer Füße aufweisen, von denen einer, mehrere oder alle wie oben beschrieben ausgeführt sind.

In einer weiteren Ausgestaltung der Erfindung weist das Kühl- bzw. Gefriergerät einen oder mehrere zur Bedienseite des Gerätes gewandte Füße und einen oder mehrere zur Rückseite des Gerätes gewandte Füße auf, wobei zumindest einer oder mehrere der zur Rückseite des Gerätes gewandten Füße wie oben beschrieben ausgeführt ist.

Weitere Einzelheiten und Vorteile der Erfindung werden anhand eines in der Zeichnung dargestellten Ausführungsbeispiels erläutert. Es zeigen:
- Figur 1:: eine Seitenansicht eines Kühl- und/oder Gefriergerätes gemäß der Erfindung mit einem frontseitigen Fuß und einer rückwärtigen Stellfußeinheit,
- Figur 2:: eine Schnittdarstellung durch die Stellfußeinheit des Geräts und
- Figur 3:: eine Explosionsdarstellung der Stellfußeinheit.

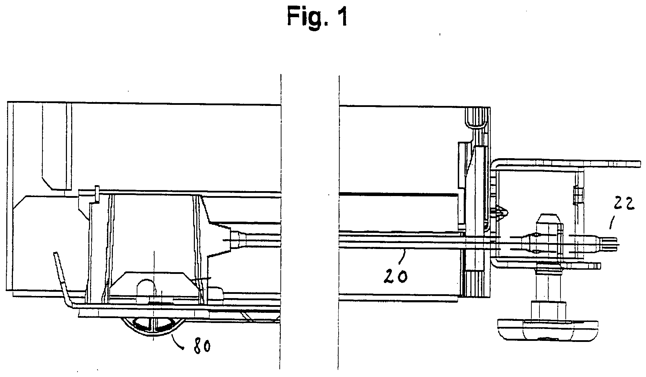

Figur 1 zeigt in einer Seitenansicht den unteren Bereich eines Kühl- und/oder Gefriergerätes, dessen rückwärtiger Abschnitt sich gemäß Figur 1 links und dessen frontseitiger Abschnitt sich gemäß Figur 1 rechts befindet. Im rechts dargestellten frontseitigen Bereich des Gerätes befindet sich eine Sockelleiste, die über einen Fuß die frontseitige Abstützung des Gerätes übernimmt. Von der Frontseite bis zu dem im rückwärtigen Bereich angeordneten Fuß erstreckt sich eine drehbare Stange 20, die in ihrem rechts dargestellten von der Frontseite zugänglichen Endbereich 22 eine Werkzeugaufnahme aufweist, auf die ein entsprechendes Werkzeug zur Rotation der Stange 20 aufgesteckt werden kann. Als Antriebsmöglichkeiten können ein formschlüssiger Außen- und Innenantrieb vorgesehen sein, der sich auf der Vorderseite im Sockelbereich des Gerätes zur Bedienseite hin erstreckt. Sind mehrere Antriebe vorgesehen, so stehen für den Nutzer auch dementsprechend mehrere Möglichkeiten zur Verfügung, eine Höhenverstellung vorzunehmen. In Betracht kommen beispielsweise Steckschlüssel, Sechskantschlüssel, Torx-Schlüssel, etc.

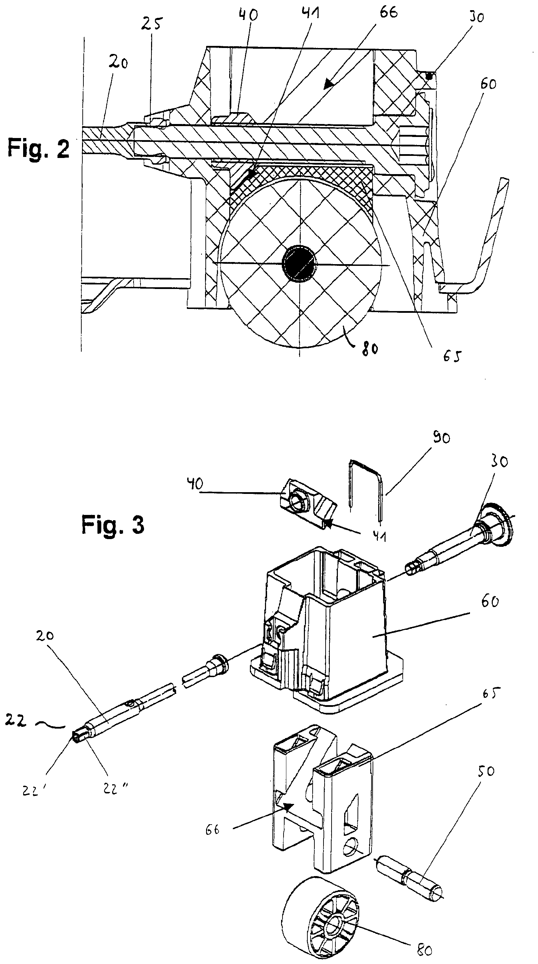

Wie dies aus Figur 1 weiter ersichtlich ist, werden die hinteren Stellfüße durch Rollen 80 gebildet, wie dies im Detail zu Figur 2 erläutert wird.

Figur 2 zeigt den hinteren, von der Bedienseite abgewandten Endbereich der Stange 20, die über eine Steckkupplung 25 mit einer Spindel 30 in Verbindung steht. Sowohl die Stange 20 als auch die Spindel 30 sind drehbar. Die Steckkupplung 25 ist derart ausgeführt, dass sie das durch Verdrehen der Stange 20 aufgebrachte Drehmoment an die Spindel 30 überträgt. Auch Winkelversätze sind denkbar, um eine optimale Positionierung im Frontbereich des Haushaltsgerätes zu gewährleisten. Während des Drehens bleibt die Stange 20 axial ortsfest angeordnet.

Die Spindel 30 ist in ihren beiden Endbereichen horizontal in dem Gehäuse 60 gelagert. Zwischen diesen beiden Lagerbereichen weist die Spindel ein Außengewinde auf, das mit dem Innengewinde einer Verstelleinheit bzw. Mutter 40 kämmt.

Die Drehung der Spindel 30 führt zu einer Bewegung der Verstelleinheit 40 in axialer Richtung. Die Verstelleinheit 40 weist auf ihrer Unterseite eine schräg angeordnete, das heißt zur Horizontalen geneigte Gleitfläche 41 auf. Die Gleitfläche 41 gleitet an der parallelen Fläche 66 des Fußteils 65, das von unten in das Gehäuse 60 eingesteckt wird, wie dies aus Figur 3 ersichtlich ist.

Die Flächen 41 und 66 wandeln die bei Rotation der Spindel 30 auftretende Horizontalbewegung gemäß dem Prinzip der schiefen Ebene in eine Vertikalbewegung um, die der Höhenverstellung des Gerätes entspricht.

Das Gleitstück bzw. die Verstelleinheit 40 ist derart angeordnet, dass sie gegen Verdrehen gesichert ist. Dies wird zum einen über die durch die Gewichtskraft hervorgerufene Flächenpressung in dem Gleitflächenpaar 41, 66 und zum anderen über einen Formschluss durch die konstruktive Ausgestaltung der zu paarenden Teile hergestellt.

Das sich bei Rotation der Spindel 30 vertikal bewegende Fußteil 65 nimmt in seinem unteren Abschnitt eine Achse 50 auf, auf der drehbar die Rolle 80 gelagert ist. Somit bleiben bei jeder Höheneinstellung die erfindungsgemäßen Füße rollend bewegbar.

Wie dies aus Figur 3 ersichtlich ist, ist der von dem Gehäuse 60 umgebene Hohlraum sowie das Fußteil 65 rechteckig ausgeführt. Dies führt dazu, dass eine Drehung des Fußteils 65 in dem Gehäuse 60 nicht möglich ist. Der Drehfreiheitsgrad des Rades wird über die formschlüssige Führung des Fußteils 65 in dem Gehäuse 60 vorgegeben.

Figur 3 zeigt die beschriebene Anordnung in einer Explosionsdarstellung. Aus dieser wird nochmals die zur Horizontalen geneigte Ebene 66 des Fußteils 65 sowie auch die schiefe Ebene 41 der Verstelleinheit 40 sichtbar. Beide Flächen 41, 66 wirken zusammen und sind zueinander parallel angeordnet, wenn die Längsachse der Bohrung der Verstelleinheit 40 mit der Längsachse der Spindel 30 fluchtet.

Das Bezugszeichen 90 kennzeichnet eine Feder, die die Spindel 30 in dem Gehäuse 60 hält, wenn nach dem Erreichen der untersten Stellung der Versuch unternommen wird, die Spindel 30 weiter zu drehen.

Wie dies aus den Figuren 1 bis 3 hervorgeht, werden die Reaktionskräfte der durch das Gewicht des Gerätes aufgebrachten Vertikallast ausschließlich in dem Grundgehäuse 60 aufgenommen. Eine Belastung des gesamten Haushaltsgeräterahmens ist somit nicht vorgesehen.

Abweichend vom Stand der Technik ist des weiteren festzuhalten, dass erfindungsgemäß die Stange 20 bei Betätigung der Vorrichtung ausschließlich auf Torsion, das heißt weder auf Zug noch auf Druck beansprucht wird.

Ein weiterer Vorteil der Erfindung ergibt sich daraus, dass beim Verstellvorgang, das heißt bei Rotation der Spindel 30 mittels der Stange 20 eine reine Vertikalbewegung durchgeführt wird, die unabhängig von der Fußbodenbeschaffenheit erfolgt. Durch diese Art der Höhenverstellung wird keine horizontale Verschiebung des Gerätes durch Verstellen der Höhe hervorgerufen.

Die Einzelteile der erfindungsgemäßen Stellfußeinheit sind in fertigungstechnischer Hinsicht vorwiegend als Kunststoff- und Fließpressteile ausgeführt. Dadurch lassen sich vorteilhafte Einsparungen hinsichtlich der Montage erzielen. Durch in den Kunststoffteilen realisierbare Schnappverbindungen wird außerdem die Teilanzahl reduziert. Dabei ist im besonderen die Verbindung zu nennen, die die Stange 20 mit der Verstellspindel 30 an der Kupplungsstelle 25 ohne weitere Verbindungselemente verbindet.

Als Montagehilfen sind die angepreßten, erhabenen Formelemente an der Stange 20 sowie an der Spindel 30 sowie der auf der vom Bediener abgewandten Seite befindliche Innenantrieb der Spindel 30 zu nennen.

Die erfindungsgemäße Anordnung ist selbstverständlich auch ohne Rad 80 denkbar. Auch ein starrer Stellfuß ist von der Erfindung umfaßt.

Des weiteren ist denkbar, dass die Formschlussführung zwischen Fußteil 65 und Gehäuse 60 nicht über die Form beider Teile sondern mittels des Fußes 65 sowie durch die das Fußteil 65 durchtauchende Spindel 30 realisiert wird.

Bei dem System kann es sich um ein modular aufgebautes Stellfußkonzept für Kühl- und/oder Gefriergeräte handeln. Dieses Baukastensystem sieht vor, dass es bei der Endmontage bzw. durch den Kunden selbst entschieden wird, ob starre oder höhenjustierbare Stellfüße zum Einsatz kommen sollen. Dies wird dadurch erreicht, dass zum einen eine Stellfußeinheit mit höhenjustierbarem Rad und zum anderen eine mit in der Höhe unverstellbaren Rad im Haushaltsgerät montiert werden kann. Dadurch sind optimierte niedrigere Fertigungskosten und für den Endverbraucher eine nach seinen Bedürfnissen angepaßte größere Angebotspalette möglich.

## Patentansprüche

1. Kühl- und/oder Gefriergerät mit einer Stellfußeinheit (10), wobei die Stellfußeinheit (10) eine Höhenverstellvorrichtung mit einer verdrehfest in einem Gehäuse (60) angeordneten Verstelleinheit, die als Gleitstück ausgeführt ist und ein Gewinde aufweist, sowie ein relativ zu dem Gehäuse (60) verschiebbares Fußteil (65) umfasst, wobei das Fußteil (65) und/oder die Verstelleinheit eine schiefe Ebene aufweist, in der die Verstelleinheit mit dem Fußteil (65) in Kontakt steht, wobei die Stellfußeinheit eine Spindel (30) aufweist, die in ihren beiden Endbereichen in dem das Fußteil (65) formschließend aufnehmenden Gehäuse (60) drehbar gelagert ist und zwischen diesen Lagerbereichen wenigstens abschnittsweise ein Gewinde aufweist, das mit dem Gewinde der Verstelleinheit in Eingriff steht,
**dadurch gekennzeichnet,**
**dass** die Höhenverstellvorrichtung ferner eine drehbare Stange (20) aufweist, wobei sich ein vorderes Ende der Stange (20) im Bereich der Frontseite des Gerätes erstreckt, und an einem hinteren, von der Bedienseite abgewandten Endbereich derart mit der Spindel (30) in Verbindung steht, dass eine Rotation der Stange (20) zu einer Rotation der Spindel (30) führt.

2. Kühl- und/oder Gefriergerät nach Anspruch 1, **dadurch gekennzeichnet, dass** die Spindel (30) ein Außengewinde aufweist und die Verstelleinheit als Mutter (40) mit Innengewinde ausgeführt ist.

3. Kühl- und/oder Gefriergerät nach Anspruch 1 oder 2, **dadurch gekennzeichnet, dass** Stange (20) und Spindel (30) unlösbar miteinander verbunden, beispielsweise einstückig ausgeführt sind, oder dass es sich um eine lösbare Verbindung, beispielsweise um eine Steckkupplung (25) handelt.

4. Kühl- und/oder Gefriergerät nach einem der vorhergehenden Ansprüche, **dadurch gekennzeichnet, dass** die Spindel (30) in dem Gehäuse (60) an zwei in Achsrichtung der Spindel (30) voneinander beabstandeten Positionen gelagert ist und dass die Spindel (30) in dem zwischen den Lagern befindlichen Abschnitt ein Außengewinde aufweist.

5. Kühl- und/oder Gefriergerät nach einem der vorhergehenden Ansprüche, **dadurch gekennzeichnet, dass** das Fußteil (65) in das Gehäuse (60) zumindest teilweise einschiebbar ist.

6. Kühl- und/oder Gefriergerät nach einem der vorhergehenden Ansprüche, **dadurch gekennzeichnet, dass** in dem Fußteil (65) eine Achse (50) angeordnet ist, auf der eine Rolle (80) drehbar gelagert ist.

7. Kühl- und/oder Gefriergerät nach Anspruch 6, **dadurch gekennzeichnet, dass** das Fußteil (65) formschlüssig in dem Gehäuse (60) derart aufgenommen ist, dass eine Rotation des Fußteil (65) relativ zu dem Gehäuse (60) um eine vertikale Achse begrenzt oder unterbunden wird.

8. Kühl- und/oder Gefriergerät nach einem der vorhergehenden Ansprüche, **dadurch gekennzeichnet, dass** die Verstelleinheit bzw. Mutter (40) eine Bohrung mit einem Innengewinde aufweist, in der die Spindel (30) drehbar aufgenommen ist, und dass die Mutter (40) eine die schiefe Ebene bildende Fläche aufweist, die gegenüber der Längsachse der Bohrung geneigt ist.

9. Kühl- und/oder Gefriergerät nach einem der vorhergehenden Ansprüche, **dadurch gekennzeichnet, dass** die Stange (20) in ihrem vorderen Endbereich (22) eine Werkzeugaufnahme zum Zwecke der Rotation der Stange (20) mittels eines Werkzeuges aufweist.

10. Kühl- und/oder Gefriergerät nach einem der vorhergehenden Ansprüche, **dadurch gekennzeichnet, dass** ein Sicherungselement vorgesehen ist, das die Spindel (30) gegen axiales Verschieben sichert.

11. Kühl- und/oder Gefriergerät nach Anspruch 10, **dadurch gekennzeichnet, dass** das Sicherungselement als Feder (90) ausgeführt ist.

12. Kühl- und/oder Gefriergerät nach einem der vorhergehenden Ansprüche, **dadurch gekennzeichnet, dass** sich das vordere ein Ende der Stange (20) im Bereich einer Sockelleiste des Gerätes erstreckt.

13. Kühl- und/oder Gefriergerät nach einem der vorhergehenden Ansprüche, **dadurch gekennzeichnet, dass** das Kühl- und/oder Gefriergerät mehrere Füße aufweist, von den einer, mehrere oder alle als Stellfußeinheit gemäß der Definition eines der vorhergehenden Ansprüche ausgeführt sind.

14. Kühl- und/oder Gefriergerät nach einem der vorhergehenden Ansprüche, **dadurch gekennzeichnet, dass** das Kühl- und/oder Gefriergerät über einen oder mehrere zur Bedienseite des Gerätes gewandte Füße und über einen oder mehrere zur Rückseite des Gerätes gewandte Füße aufweist, und dass zumindest einer oder mehrere der zur Rückseite des Gerätes gewandten Füße als Stellfußeinheit nach der Definition eines der vorhergehenden Ansprüche ausgeführt ist.

## Claims

1. A refrigerator unit and/or freezer unit having an adjustment foot unit (10), the adjustment foot unit (10) comprising a vertical adjustment device having an adjustment unit which is arranged rotationally fixedly in a housing (60), is designed as a sliding block and has a thread as well as comprising a foot part (65) displaceable relative to the housing (60), with the foot part (65) and/or the adjustment unit having a sloped plane in which the adjustment unit is in contact with the foot part (65), the adjustment unit having a spindle (30) rotatably supported in its two end regions in the housing (60) receiving the foot part (65) in a shape-matched manner and having a thread at least sectionally, between these support regions being engaged with the thread of the adjustment unit,
**characterized in that**
the vertical adjustment device further has a rotatable rod (20), with a front end of the rod (20) extending in the region of the front side of the refrigerator unit and/or freezer unit, and is connected to the rod at a rear end region remote from the operating side such a rotation of the rod (20) results in a rotation of the spindle (30).

2. A refrigerator unit and/or freezer unit in accordance with claim 1, **characterized in that** the spindle (30) has an external thread and the adjustment unit is made as a nut (40) with an internal thread.

3. A refrigerator unit and/or freezer unit in accordance with either of claims 1 or 2, **characterized in that** the rod (20) and the spindle (30) are unreleasably connected to one another, for example are made in one piece; or **in that** the connection is a releasable connection, for example a plug coupling (25).

4. A refrigerator unit and/or freezer unit in accordance with one of the preceding claims, **characterized in that** the spindle (30) is supported at two mutually spaced apart positions in the axial direction of the spindle (30) in the housing (60); and **in that** the spindle (30) has an external thread in the section located between the bearings.

5. A refrigerator unit and/or freezer unit in accordance with one of the preceding claims, **characterized in that** the foot part (65) can be pushed at least partly into the housing (60).

6. A refrigerator unit and/or freezer unit in accordance with one of the preceding claims, **characterized in that** an axle (50) is arranged in the foot part (65) and a roller (80) is rotatably supported on said axle.

7. A refrigerator unit and/or freezer unit in accordance with claim 6, **characterized in that** the foot part (65) is received in the housing (60) in a shape matched manner such that a rotation of the foot part (65) relative to the housing (60) around a vertical axis is bounded or prohibited.

8. A refrigerator unit and/or freezer unit in accordance with one of the preceding claims, **characterized in that** the adjustment unit or nut (40) has a bore with an internal thread in which the spindle (30) is rotatably received; and **in that** the nut (40) has a surface forming the sloped plane which is inclined with respect to the longitudinal axis of the bore.

9. A refrigerator unit and/or freezer unit in accordance with one of the preceding claims, **characterized in that** the rod (20) has a tool mount in its front end region (22) for the purpose of the rotation of the rod (20) by means of a tool.

10. A refrigerator unit and/or freezer unit in accordance with one of the preceding claims, **characterized in that** a securing member is provided which secures the spindle (30) against axial displacement.

11. A refrigerator unit and/or freezer unit in accordance with claim 10, **characterized in that** the securing member is made as a spring (90).

12. A refrigerator unit and/or a freezer unit in accordance with one of the preceding claims, **characterized in that** the front end of the rod (20) extends in the region of a baseboard of the refrigerator unit and/or freezer unit.

13. A refrigerator unit and/or a freezer unit in accordance with one of the preceding claims, **characterized in that** the refrigerator unit and/or freezer unit has a plurality of feet of which one, a plurality or all of them is/are made as an adjustment foot unit in accordance with the definition of one of the preceding claims.

14. A refrigerator unit and/or a freezer unit in accordance with one of the preceding claims, **characterized in that** the refrigerator unit and/or freezer unit has one or more feet facing the operating side of the refrigerator unit and/or freezer unit and one or more feet facing the rear side of the refrigerator unit and/or freezer unit; and **in that** at least one or a plurality of the feet facing the rear side of the refrigerator unit and/or freezer unit is made as an adjustment foot unit in accordance with the definition of one of the preceding claims.

## Revendications

1. Appareil de réfrigération et/ou de congélation comprenant une unité de pied réglable (10), l'unité de pied réglable (10) comprenant un dispositif de réglage en hauteur doté d'une unité de réglage disposée dans un boîtier (60) de manière à résister à la torsion, ladite unité de réglage étant réalisée sous la forme d'une pièce coulissante et présentant un filet, ainsi qu'une pièce formant pied (65) mobile par rapport au boîtier (60), la pièce formant pied (65) et/ou l'unité de réglage présentant un plan oblique, dans lequel l'unité de réglage est en contact avec la pièce formant pied (65), l'unité de pied réglable comportant une broche (30) qui, dans ses deux zones d'extrémité, est montée rotative dans le boîtier (60) logeant la pièce formant pied (65) par complémentarité de forme et qui présente entre ces zones d'appui au moins sur certaines parties un filet, qui est en prise avec le filet de l'unité de réglage,
**caractérisé en ce que**
le dispositif de réglage en hauteur comporte en outre une barre (20) rotative, une extrémité avant de la barre (20) s'étendant dans la zone de la face avant de l'appareil, et étant en liaison avec la broche (30) dans une zone d'extrémité arrière orientée à l'opposé du côté d'utilisation de telle manière qu'une rotation de la barre (20) entraîne une rotation de la broche (30).

2. Appareil de réfrigération et/ou de congélation selon la revendication 1, **caractérisé en ce que** la broche (30) présente un filet extérieur et l'unité de réglage est réalisée sous la forme d'un écrou (40) avec filet intérieur.

3. Appareil de réfrigération et/ou de congélation selon la revendication 1 ou 2, **caractérisé en ce que** la barre (20) et la broche (30) sont reliées l'une à l'autre de manière non détachable, par exemple sont réalisées d'un seul tenant, ou **en ce qu'**il s'agit d'une liaison détachable, par exemple un accouplement par emboîtement (25).

4. Appareil de réfrigération et/ou de congélation selon l'une des revendications précédentes, **caractérisé en ce que** la broche (30) est montée dans le boîtier (60) en deux positions espacées l'une de l'autre dans la direction axiale de la broche (30) et **en ce que** la broche (30) présente un filet extérieur dans la partie se trouvant entre les appuis.

5. Appareil de réfrigération et/ou de congélation selon l'une des revendications précédentes, **caractérisé en ce que** la pièce formant pied (65) peut être insérée au moins en partie dans le boîtier (60).

6. Appareil de réfrigération et/ou de congélation selon l'une des revendications précédentes, **caractérisé en ce qu'**un axe (50) est disposé dans la pièce formant pied (65), sur lequel une roulette (80) est montée de manière rotative.

7. Appareil de réfrigération et/ou de congélation selon la revendication 6, **caractérisé en ce que** la pièce formant pied (65) est logée dans le boîtier (60) par complémentarité de forme de telle manière qu'une rotation de la pièce formant pied (65) par rapport au boîtier (60) sur un axe vertical est limitée ou empêchée.

8. Appareil de réfrigération et/ou de congélation selon l'une des revendications précédentes, **caractérisé en ce que** l'unité de réglage ou l'écrou (40) présente un trou avec un filet intérieur, dans lequel la broche (30) est reçue de manière rotative, et **en ce que** l'écrou (40) présente une surface formant le plan oblique, qui est inclinée par rapport à l'axe longitudinal du trou.

9. Appareil de réfrigération et/ou de congélation selon l'une des revendications précédentes, **caractérisé en ce que** la barre (20) présente, dans sa zone d'extrémité avant (22), un logement d'outil à des fins de rotation de la barre (20) au moyen d'un outil.

10. Appareil de réfrigération et/ou de congélation selon l'une des revendications précédentes, **caractérisé en ce qu'**un élément de sûreté est prévu, qui empêche un déplacement axial de la broche (30).

11. Appareil de réfrigération et/ou de congélation selon la revendication 10, **caractérisé en ce que** l'élément de sûreté est réalisé sous la forme d'un ressort (90).

12. Appareil de réfrigération et/ou de congélation selon l'une des revendications précédentes, **caractérisé en ce que** l'extrémité avant de la barre (20) s'étend dans la zone d'une bande de socle de l'appareil.

13. Appareil de réfrigération et/ou de congélation selon l'une des revendications précédentes, **caractérisé en ce que** l'appareil de réfrigération et/ou de congélation présente plusieurs pieds, dont un, plusieurs ou tous sont réalisés sous la forme d'une unité de pied réglable selon la définition de l'une des revendications précédentes.

14. Appareil de réfrigération et/ou de congélation selon l'une des revendications précédentes, **caractérisé en ce que** l'appareil de réfrigération et/ou de congélation présente un ou plusieurs pieds tournés vers le côté d'utilisation de l'appareil et un ou plusieurs pieds tournés vers l'arrière de l'appareil, et **en ce qu'**au moins un ou plusieurs des pieds tournés vers l'arrière de l'appareil sont réalisés sous la forme d'une unité de pied réglable selon la définition de l'une des revendications précédentes.
